(19) Europäisches Patentamt
European Patent Office
Office européen des brevets

(11) **EP 3 744 987 A1**

(12) **EUROPEAN PATENT APPLICATION**

(43) Date of publication:
**02.12.2020 Bulletin 2020/49**

(51) Int Cl.:
**F15B 15/28** (2006.01)

(21) Application number: **19210668.0**

(22) Date of filing: **21.11.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.05.2019 IN 201911020943**

(71) Applicant: **Hamilton Sundstrand Corporation
Charlotte, NC 28217-4578 (US)**

(72) Inventors:
• **VIJAY, Ashish
334003 Rajasthan (IN)**
• **RANI, Udaya
630302 Tamil Nadu (IN)**
• **JOSULA, Anil Prasad
520002 Andhra Pradesh (IN)**
• **VENKATESHA, Harish
577601 Davangere (IN)**

(74) Representative: **Dehns
St. Bride's House
10 Salisbury Square
London EC4Y 8JD (GB)**

(54) **ULTRASONIC POSITION DETECTION TEMPERATURE CALIBRATION**

(57)     Disclosed is a piston position control system that includes a fluid control valve (116) configured to control a position (144) of a piston (122). The piston position control system includes a controller (140) having stored instructions operable to receive a piston position command. The stored instructions are operable to receive a first time-of-flight and a second time-of-flight. The stored instructions are operable to operate the fluid control valve to adjust the position of the piston according to the piston position command based on a position estimate defined by the first time-of-flight, $t_1$ and the second time-of-flight, $t_2$. The stored instructions are operable to adjust the position estimate to operate the fluid control valve based on a baseplate temperature derived from a fluid temperature defined by the first time-of-flight and the second time-of-flight.

FIG. 1

## Description

CROSS REFERENCE TO RELATED APPLICATIONS

This application claims the benefit of Indian Application No. 201911020943, filed May 27, 2019.

BACKGROUND

Exemplary embodiments pertain to the art of position estimation for actuator pistons. Ultrasonic sensors may be used to determine actuator distance and measure system parameters that may otherwise be unavailable.

BRIEF DESCRIPTION

Disclosed is a piston position control system that includes a fluid control valve configured to control a position of a piston. The piston position control system includes a controller having stored instructions operable to receive a piston position command. The stored instructions are operable to receive a first time-of-flight and a second time-of-flight. The stored instructions are operable to operate the fluid control valve to adjust the position of the piston according to the piston position command based on a position estimate defined by the first time-of-flight, $t_1$ and the second time-of-flight, $t_2$. The stored instructions are operable to adjust the position estimate to operate the fluid control valve based on a baseplate temperature derived from a fluid temperature defined by the first time-of-flight and the second time-of-flight.

In addition to one or more of the features described above, or as an alternative, further embodiments may include an ultrasonic transceiver configured to output a first acoustic signal and define the first time-of-flight based on a first echo associated with the first acoustic signal.

In addition to one or more of the features described above, or as an alternative, further embodiments may include that the piston is disposed in a cylinder having a baseplate associated with the baseplate temperature.

In addition to one or more of the features described above, or as an alternative, further embodiments may include that the cylinder houses fluid associated with the fluid temperature.

In addition to one or more of the features described above, or as an alternative, further embodiments may include that a baseplate material composition of the baseplate includes aluminum.

In addition to one or more of the features described above, or as an alternative, further embodiments may include that the piston includes a head defining a step having a height, $h$, and the position estimate is calculated according to a thickness, $L$, of the baseplate, a transmission speed, $v_P$, associated with the baseplate, and the height.

In addition to one or more of the features described above, or as an alternative, further embodiments may include that the position estimate is equal to

$$\left(t_1 - \frac{L}{v_P}\right) * \frac{h}{(t_2-t_1)}.$$

In addition to one or more of the features described above, or as an alternative, further embodiments may include that the fluid temperature is based on a fluid lookup table that defines the fluid temperature with respect to the first time-of-flight and the second time-of-flight.

In addition to one or more of the features described above, or as an alternative, further embodiments may include that the baseplate temperature is based on a baseplate temperature lookup table that defines the baseplate temperature with respect to the fluid temperature.

In addition to one or more of the features described above, or as an alternative, further embodiments may include that a piston material composition of the piston includes Steel.

Also disclosed is a method that includes receiving a position command. The method includes receiving a first time-of-flight, $t_1$, and a second time-of-flight, $t_2$. The method includes operating a fluid control valve to adjust a position of a piston according to the position command. The operation is based on a position estimate associated with the position defined by the first time-of-flight, $t_1$, and the second time-of-flight, $t_2$. The operation is adjusted according to a baseplate temperature derived from a fluid temperature defined by the first time-of-flight and the second time-of-flight.

In addition to one or more of the features described above, or as an alternative, further embodiments may include outputting a first acoustic signal and defining the first time-of-flight based on a first echo associated with the first acoustic signal.

In addition to one or more of the features described above, or as an alternative, further embodiments may include that the position estimate is equal to

$$\left(t_1 - \frac{L}{v_P}\right) * \frac{h}{(t_2-t_1)},$$ where $h$ is a height of a step of a head of the piston, $L$ is a thickness of a baseplate associated with a cylinder associated with the piston, and $v_P$ is a transmission speed associated with the baseplate.

In addition to one or more of the features described above, or as an alternative, further embodiments may include that the fluid temperature is based on a fluid lookup table that defines the fluid temperature with respect to the first time-of-flight and the second time-of-flight.

In addition to one or more of the features described above, or as an alternative, further embodiments may include that the baseplate temperature is based on a baseplate temperature lookup table that defines the baseplate temperature with respect to the fluid temperature.

Also disclosed is a hydraulic control system. The hydraulic system includes a controller having stored instructions operable to receive a position command. The instructions are operable to receive a first time-of-flight and a second time-of-flight. The instructions are operable to operate a fluid control valve to adjust a position of a piston according to the position command based on a position estimate associated with the position defined by the first time-of-flight, $t_1$, and the second time-of-flight, $t_2$, and according to a baseplate temperature derived from a fluid temperature defined by the first time-of-flight and the second time-of-flight.

In addition to one or more of the features described above, or as an alternative, further embodiments may include that the fluid temperature is based on a fluid lookup table that defines the fluid temperature with respect to the first time-of-flight and the second time-of-flight.

In addition to one or more of the features described above, or as an alternative, further embodiments may include that the baseplate temperature is based on a baseplate temperature lookup table that defines the baseplate temperature with respect to the fluid temperature.

In addition to one or more of the features described above, or as an alternative, further embodiments may include that a cylinder associated with hydraulic piston having a baseplate associated with the baseplate temperature.

In addition to one or more of the features described above, or as an alternative, further embodiments may include that the hydraulic piston includes a head defining a step having a height, $h$, and the position estimate is calculated according to a thickness, $L$, of the baseplate, a transmission speed, $v_P$, associated with the baseplate, and the height and equal to

$$\left(t_1 - \frac{L}{v_P}\right) * \frac{h}{(t_2 - t_1)}.$$

BRIEF DESCRIPTION OF THE DRAWINGS

The following descriptions should not be considered limiting in any way. With reference to the accompanying drawings, like elements are numbered alike:

FIG. 1 is a schematic of an ultrasonic based position control system; and

FIG. 2 is a method for implementing an ultrasonic based position control system.

DETAILED DESCRIPTION

A detailed description of one or more embodiments of the disclosed apparatus and method are presented herein by way of exemplification and not limitation with reference to the Figures.

Fluid actuators may be implemented to change machinery or component position. For example, fluid actuators may be implemented on aircraft to position numerous components. As one example, a fluid actuator may be used to adjust landing gear position. One such fluid actuator may be a fluid operated piston. Pistons may provide linear motion to actuate or position components. Pistons may be disposed within a cylinder housing that contains a pressurized gaseous or liquidous fluid.

An ultrasonic sensor may be positioned on a baseplate of the cylinder to bounce ultrasonic waves off of a head of the piston. The echo of the ultrasonic waves can provide a time-of-flight distance measurement based on the known propagation velocity of the ultrasonic waves through the fluid and the baseplate. As environmental conditions of the cylinder change, the temperature of the fluid and the baseplate may add error or uncertainty to the position measurement due to changes in the propagation velocity through the disparate mediums.

A step on the head of the piston may provide temperature compensation for the fluid because the propagation velocity through the fluid can be determined if a height of the step is known. The temperature may be determined by the propagation velocity. The fluid temperature may be used to determine the baseplate temperature. As such, the propagation velocity through the baseplate may be determined based on baseplate temperature. That is, the valve may be operated based on the position estimate for the piston as adjusted based on the temperature of both the baseplate and the fluid.

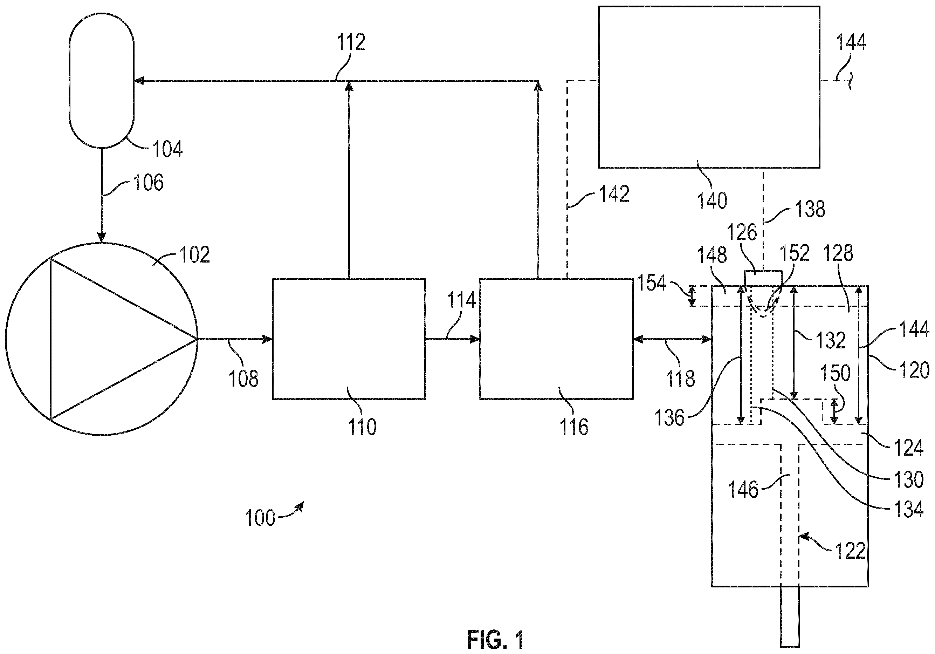

Referring to FIG. 1, a piston position control system or hydraulic control system 100 is shown. The piston position control system 100 includes a pump 102. The pump 102 may draw fluid (e.g., hydraulic or pneumatic) from accumulator or reservoir 104 through pipe 106. The pump outlet pipe 108 supplies pressurized fluid to the cylinder cavity 128 according to relieve valve 110 and fluid control valve 116. The relief valve 110 may allow the transfer of fluid from the pump outlet pipe 108 to the fluid control valve 116 unless pump outlet pipe 108 pressure rises above the relieve valve 110 setpoint. If the pressure rises above the setpoint, the relief valve 110 opens to discharge fluid through relief return pipe 112.

The fluid control valve 116 is configured to control a position 144 of the piston 122 with respect to the ultrasonic transceiver 126 by adjusting the flow of fluid through control valve outlet pipe 118. The piston 122 may be made of steel or another metallic material or alloy. The piston 122 may include a stem portion 146 and a head portion 124. The head portion 124 may include a step 150 for causing a time delay between a first echo 130 and a second echo 134. It should be appreciated that the position 144 may be defined with respect to any portion of the piston 122.

The fluid control valve 116 may be any type of control valve, including solenoid operated valves. The fluid control valve 116 may be a directional valve, providing directional flow into and out of the cylinder cavity 128. The fluid control valve 116 may be a 3/2 valve. The fluid control valve 116 may receive control input via cable 142 connected to controller 140. The controller 140 may operate the fluid control valve 116 through electrical signals, which may be either digital or analog and traverse any communications medium (e.g., copper, wireless). For example, the controller may directly control the position of the fluid control valve 116 by providing a direct current configured to operate a solenoid of the fluid control valve 116.

The controller 140 may include any combination of processors, field programmable gate arrays (FPGA), or application specific integrated circuits (ASIC). The controller may include memory, volatile and non-volatile, operable to store machine instructions from the processors and other processing mechanisms to receive, calculate, and control devices, as necessary. Machine instructions may be stored (e.g., stored instructions, stored machine instructions, stored steps) in any language or representation, including but not limited to machine code, assembly instructions, C, C++, C#, PASCAL, COBAL, PYTHON, JAVA, and RUBY. It should be appreciated that any type of wired or wireless configuration is appreciated for any of the communications from the controller. Wireless protocols such as ZIGBEE, WI-FI, BLUETOOTH, or any other implement may be used. Communications may be realized through any protocol or medium known or unknown.

The controller 140 may receive a position command 144 from another source or internally receive position commands based on stored programming. The position command 144 may be a relative distance between the transceiver 126 and the piston head 124.

The ultrasonic transceiver 126 may be any type of ultrasonic transmitter, receiver, or combination thereof. The ultrasonic transceiver may output a first acoustic signal 152 in the form of waves or other energy forms having a predetermined propagation or transmission speed (e.g., meters per second). The ultrasonic transceiver 126 outputs an ultrasonic wave and receives echoes 130, 134. As shown, the echoes 130, 134 correspond to respective distances 132, 136. The ultrasonic wave and echoes 130, 134 are received at different times due to the time-of-flight of the respective echoes 130, 134. For example, the first time-of-flight, $t_1$ is the time it takes for the echo 130 to return to the ultrasonic transceiver 126 after being sent from the ultrasonic transceiver 126. The second time-of-flight, $t_2$ is the time it takes for the echo 134 to return to the ultrasonic transceiver 126 after being sent from the ultrasonic transceiver 126. The time may be based on a number of digital clock cycles of the transceiver 126. It should be appreciated that multiple ultrasonic transceivers 126 may be used to send or receive any of the signals discussed. Additional ultrasonic transceivers 126 may also be used for redundancy.

The echoes 130, 134 may reflect off of the head portion 124 according to respective distances 132, 136 defined by step 150 and traverse both the fluid in the cylinder cavity 128 and the baseplate 148. The baseplate may be disposed within the cylinder 120. The baseplate may have thickness, $L$, 154. The baseplate 148 may be a similar material to the cylinder 120 or the piston 122. The baseplate 148 may have a distinct baseplate material composition. The baseplate 148 may be composed at least in part by aluminum. That is, the baseplate 148 has a material composition that includes aluminum. The baseplate 148 may alter the first time-of-flight and the second time-of-flight differently than the fluid within the cylinder cavity 128. That is, the wave propagation-and-time-of-flight over distances 132, 136-through the fluid within the cylinder cavity 128 may be different between the two mediums. Temperature fluctuations of the two mediums may further alter the propagation of waves and echoes 130, 134 through the fluid in the cylinder cavity 128 and the baseplate 148.

The first time-of-flight, $t_1$ and the second time-of-flight, $t_2$ may be sent to the controller 140 via transmission cable 138. The transmission cable 138 may be analog or digital and traverse any communications medium (e.g., copper, wireless). It should be appreciated that any number of calculations or determinations may be performed by any one of the fluid control valve 116, the ultrasonic transceiver 126, and the controller 140.

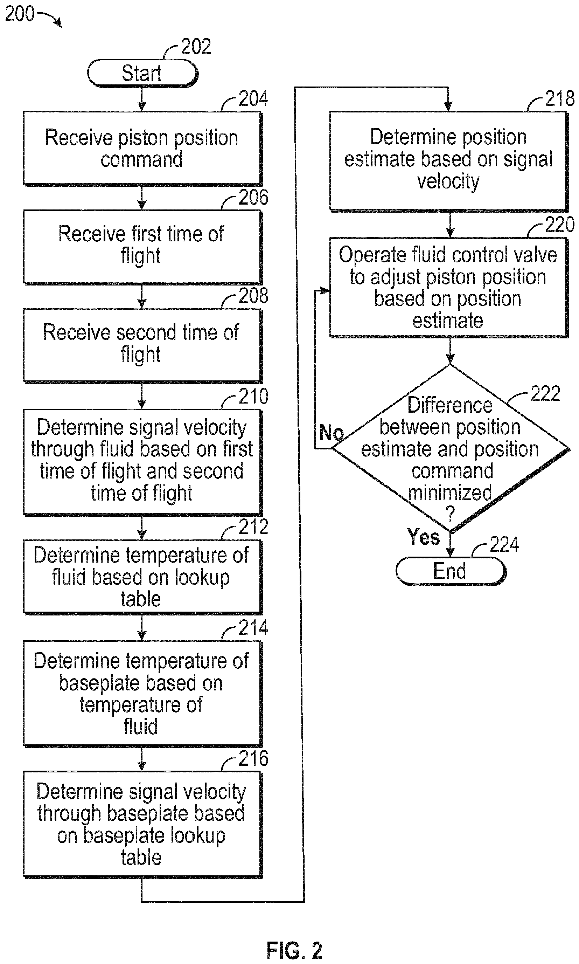

Referring to FIG. 2, a method 200 is shown. It should be appreciated that any of the steps may be omitted, reordered, repeated, or completed in parallel. Any of the components disclosed may perform any, all, or none of the mentioned steps herein. The method 200 begins in step 202. In step 204, a piston position command is received. The piston position command may be determined internally or received from an outside source. In step 206, a first time-of-flight is received. In step 208 a second time-of-flight is received. In step 210, the signal velocity, propagation velocity, or waveform propagation velocity is determined based on a difference of the first time-of-flight and the second time-of-flight. For example, the controller 140 or ultrasonic transducer may record a sent timestamp associated with transmitting the ultrasonic wave and record a received timestamp associated with receiving the ultrasonic echoes 130, 134. As such, the signal velocity through the fluid can be calculated by a difference between the first time-of-flight and the second time-of-flight because the step 150 is known.

In step 212, the temperature of the fluid within the cylinder cavity 128 is determined based on an equation, lookup table, or another implement. For example, the fluid lookup table may include entries for various temperatures as associated with various signal velocities in the relevant medium. The temperature may also be determined based on a representative equation associating temperatures and signal propagation values. As such, the controller 140 or another implement may determine the temperature of the fluid within the cylinder cavity 128.

In step 214, the temperature of the baseplate 148 is determined as being similar to the temperature of the fluid within the cylinder cavity 128. The temperature of the baseplate 148 may be exactly the same temperature as the fluid within the cylinder cavity 128 or a predetermined offset may be used to compensate for typical temperatures of the surrounding environment. In step 216, the signal velocity through the baseplate 148 is determined based on an equation, lookup table, or another implement. For example, the baseplate temperature lookup table may include entries for various temperatures as associated with various signal velocities associated with the baseplate medium. The signal velocity may also be determined based on a representative equation associating temperatures and signal velocity values. As such, the controller 140 or another implement may determine the signal velocity in the baseplate 148. In step 218, the position estimate of head 124 is determined based on the signal velocity through the fluid within the cylinder cavity 128 and the signal velocity through the baseplate 148. That is, the position estimate is adjusted to compensate for temperature effects altering the signal propagation through both the fluid in the cylinder cavity 128 and the baseplate 148. In step 220, the controller 140 operates the fluid control valve 116 to adjust piston position based on the position estimate to minimize a difference between the position command 144 and the position estimate. In step 222, the difference between the position command 144 and the position estimate is minimized or reduced within a deadband. The deadband may be based on the temperature of the baseplate 148. As an example, the deadband may increase as temperatures associated with the baseplate 148 diverge from normal operating temperature or temperatures at the extremes of the lookup tables used in steps 210-216. In step 224, the processes repeats or ends.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the invention as defined by the claims. In addition, many modifications may be made to adapt a particular situation or material to the teachings of the present disclosure without departing from the scope of the invention. Therefore, it is intended that the present disclosure not be limited to the particular embodiment disclosed as the best mode contemplated for carrying out this present disclosure, but that the present disclosure will include all embodiments falling within the scope of the claims.

## Claims

1. A piston position control system comprising:

   a fluid control valve (116) configured to control a position (144) of a piston (122); and
   a controller (140) having stored instructions operable to:

   receive a piston position command;
   receive a first time-of-flight and a second time-of-flight; and
   operate the fluid control valve to adjust the position of the piston according to the piston position command based on a position estimate defined by the first time-of-flight, $t_1$ and the second time-of-flight, $t_2$;
   adjust the position estimate to operate the fluid control valve based on a baseplate temperature derived from a fluid temperature defined by the first time-of-flight and the second time-of-flight.

2. The piston position control system of claim 1, further comprising an ultrasonic transceiver (126) configured to output a first acoustic signal and define the first time-of-flight based on a first echo associated with the first acoustic signal.

3. The piston position control system of claim 1 or 2, wherein the piston is disposed in a cylinder (120) having a baseplate (148) associated with the baseplate temperature.

4. The piston position control system of claim 3, wherein the cylinder houses fluid associated with the fluid temperature.

5. The piston position control system of claim 3 or 4, wherein a baseplate material composition of the baseplate (148) includes aluminum, and preferably wherein a piston material composition of the piston includes steel.

6. The piston position control system of claim 3, 4 or 5 wherein the piston includes a head (124) defining a step having a height, $h$, and the position estimate is calculated according to a thickness, $L$, of the baseplate, a transmission speed, $v_P$, associated with the baseplate, and the height.

7. The piston position control system of claim 6, wherein the position estimate is equal to $\left(t_1 - \dfrac{L}{v_P}\right) * \dfrac{h}{(t_2 - t_1)}$.

8. The piston position control system of any preceding claim, wherein the fluid temperature is based on a fluid lookup table that defines the fluid temperature with respect to the first time-of-flight and the second time-of-flight.

9. The piston position control system of any preceding claim, wherein the baseplate temperature is based on a baseplate temperature lookup table that defines the baseplate temperature with respect to the fluid temperature.

10. A method comprising:

   receiving a position command;
   receiving a first time-of-flight, $t_1$, and a second time-of-flight, $t_2$
   operating a fluid control valve to adjust a position of a piston according to the position command

      based on a position estimate associated with the position defined by the first time-of-flight, $t_1$, and the second time-of-flight, $t_2$, and
      adjusted according to a baseplate temperature derived from a fluid temperature defined by the first time-of-flight and the second time-of-flight.

11. The method of claim 10, further comprising outputting a first acoustic signal and defining the first time-of-flight based on a first echo associated with the first acoustic signal.

12. The method of claim 10 or 11, wherein the position estimate is equal to $\left(t_1 - \dfrac{L}{v_P}\right) * \dfrac{h}{(t_2 - t_1)}$, where $h$ is a height of a step of a head of the piston, $L$ is a thickness of a baseplate associated with a cylinder associated with the piston, and $v_P$ is a transmission speed associated with the baseplate.

13. The method of claim 10, 11 or 12, wherein the fluid temperature is based on a fluid lookup table that defines the fluid temperature with respect to the first time-of-flight and the second time-of-flight.

14. The method of any of claims 10 to 13, wherein the baseplate temperature is based on a baseplate temperature lookup table that defines the baseplate temperature with respect to the fluid temperature.

15. A hydraulic control system comprising:
   a controller (140) having stored instructions operable to perform the method of any of claims 10 to 14.

**FIG. 1**

EP 3 744 987 A1

200

202
Start

204
Receive piston position command

206
Receive first time of flight

208
Receive second time of flight

210
Determine signal velocity through fluid based on first time of flight and second time of flight

212
Determine temperature of fluid based on lookup table

214
Determine temperature of baseplate based on temperature of fluid

216
Determine signal velocity through baseplate based on baseplate lookup table

218
Determine position estimate based on signal velocity

220
Operate fluid control valve to adjust piston position based on position estimate

222
Difference between position estimate and position command minimized?

No

Yes

224
End

FIG. 2

Europäisches
Patentamt

European
Patent Office

Office européen
des brevets

# EUROPEAN SEARCH REPORT

Application Number

EP 19 21 0668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S59 62705 A (KAYABA INDUSTRY CO LTD) 10 April 1984 (1984-04-10) * claim 1; figures 1-4 * | 1-15 | INV. F15B15/28 |
| A | JP H07 32203 U (SUMITOMO METAL INDUSTRIES LTD) 16 June 1995 (1995-06-16) * paragraph [0020]; figure 1 * | 1-15 | |
| A | EP 0 978 659 A2 (TOYODA AUTOMATIC LOOM WORKS [JP]) 9 February 2000 (2000-02-09) * figure 6 * | 1-15 | |
| A | US 4 543 649 A (HEAD KENNETH O [US] ET AL) 24 September 1985 (1985-09-24) * figures 1,12 * | 1-15 | |
| A | US 2010/288036 A1 (VOLKWEIN THOMAS [DE]) 18 November 2010 (2010-11-18) * figure 3 * | 6,12 | |
| A | JP H09 292270 A (MITSUBISHI ELECTRIC CORP) 11 November 1997 (1997-11-11) * paragraph [0001] * | 1 | TECHNICAL FIELDS SEARCHED (IPC) F15B |
| A | JP H10 310396 A (TOYODA AUTOMATIC LOOM WORKS) 24 November 1998 (1998-11-24) * figures 1-6 * | 1-15 | |
| A | WO 2016/159866 A1 (VÄDERSTAD HOLDING AB [SE]) 6 October 2016 (2016-10-06) * figure 1 * | 1-15 | |

The present search report has been drawn up for all claims

| Place of search | Date of completion of the search | Examiner |
|---|---|---|
| Munich | 23 April 2020 | Verger, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 0668

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2020

| Patent document cited in search report | | | Publication date | Patent family member(s) | | | Publication date |
|---|---|---|---|---|---|---|---|
| JP | S5962705 | A | 10-04-1984 | JP<br>JP | H025926<br>S5962705 | B2<br>A | 06-02-1990<br>10-04-1984 |
| JP | H0732203 | U | 16-06-1995 | NONE | | | |
| EP | 0978659 | A2 | 09-02-2000 | AU<br>CA<br>CN<br>EP<br>KR<br>TW<br>US | 738040<br>2279567<br>1245888<br>0978659<br>20000017141<br>445235<br>6267042 | B2<br>A1<br>A<br>A2<br>A<br>B<br>B1 | 06-09-2001<br>07-02-2000<br>01-03-2000<br>09-02-2000<br>25-03-2000<br>11-07-2001<br>31-07-2001 |
| US | 4543649 | A | 24-09-1985 | AU<br>CA<br>EP<br>US<br>WO | 3509784<br>1226661<br>0158678<br>4543649<br>8501800 | A<br>A<br>A1<br>A<br>A1 | 07-05-1985<br>08-09-1987<br>23-10-1985<br>24-09-1985<br>25-04-1985 |
| US | 2010288036 | A1 | 18-11-2010 | CN<br>DE<br>EP<br>US<br>WO | 101809406<br>102007035252<br>2174093<br>2010288036<br>2009015741 | A<br>A1<br>A1<br>A1<br>A1 | 18-08-2010<br>12-02-2009<br>14-04-2010<br>18-11-2010<br>05-02-2009 |
| JP | H09292270 | A | 11-11-1997 | NONE | | | |
| JP | H10310396 | A | 24-11-1998 | NONE | | | |
| WO | 2016159866 | A1 | 06-10-2016 | SE<br>WO | 1550399<br>2016159866 | A1<br>A1 | 03-10-2016<br>06-10-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201911020943